# EUROPÄISCHE PATENTANMELDUNG

(11) **EP 2 065 117 A1**
(43) Veröffentlichungstag der Anmeldung: **03.06.2009**
(21) Anmeldenummer: 07023148.5
(22) Anmeldetag: 29.11.2007
(51) Int. Cl.: B23K 26/03, B23K 26/02, H04N 13/00

(54) **Verfahren und Bearbeitungsmaschine zur Prozessvisualisierung einer Bearbeitung eines Bearbeitungswerkstückes**

(71) Anmelder: TRUMPF Laser GmbH + Co. KG, 78713 Schramberg (DE)
(72) Erfinder: Heinzmann, Michael, 78713 Schramberg (DE); Erchinger, Hans Peter, 78112 St. Georgen (DE)
(74) Vertreter: Maser, Jochen

(57) **Zusammenfassung**

Die Erfindung betrifft ein Verfahren zur Prozessvisualisierung einer Bearbeitung eines Werkstückes (12) mit einem Materialbearbeitungsstrahl (14), insbesondere einem Laserstrahl, bei dem zur Bearbeitung des Werkstücks (12) der Materialbearbeitungsstrahl (14) durch einen Materialbearbeitungskopf (21) in zumindest einer Bearbeitungsposition zum Werkstück (12) positioniert wird und bei dem von einer Bearbeitungsstelle, in welcher der Materialbearbeitungsstrahl (14) auf das Werkstück (12) auftrifft, zumindest ein Prozessbild erfasst wird, wobei der Materialbearbeitungskopf (21) mit einer ansteuerbaren und über zumindest eine ein- oder mehrachsige Führung (18) zur Positionierung des Schneidstrahles (14) zur Bearbeitungsstelle verfahren wird, das zumindest eine Prozessbild durch zumindest zwei Signalerfassungseinrichtungen (24) erfasst wird, die Signale des zumindest einen von den Signalerfassungseinrichtungen (24) erfassten Prozessbildes zur Signalbearbeitungseinrichtung (27) weitergeleitet und aufbereitet werden und die aufbereiteten Signale des zumindest einen Prozessbildes an zumindest ein elektronisches Binokular (29) mit zwei Bildschirmen oder an zumindest einen Computermonitor (30) weitergeleitet werden.

## Beschreibung

Die Erfindung betrifft ein Verfahren zur Prozessvisualisierung einer Bearbeitung eines Werkstückes sowie eine Bearbeitungsmaschine mit einer Prozessvisualisierung zur Bearbeitung eines Werkstückes.

Zur Bearbeitung von kleineren Werkstücken mit einem Schweißstrahl, insbesondere Laserstrahl, ist bereits eine Bearbeitungsmaschine mit der Bezeichnung PowerWeld der Firma Trumpf Laser GmbH + Co. KG bekannt, bei der ein abgeschlossener Arbeitsraum vorgesehen ist. In diesem abgeschlossen Arbeitsraum ist eine luftgelagerte Arbeitsplatte zur Aufnahme eines Werkstückes vorgesehen, wobei diese luftgelagerte Arbeitsplatte ein einfaches Positionieren des Werkstückes ermöglicht, um das Werkstück gegenüber einer ortsfesten Schweißstrahleinrichtung zum Arbeitsraum zu bewegen und eine Bearbeitung des Werkstückes zu ermöglichen, Die Positionierung des Werkstückes wird angesteuert. Zur Beobachtung des Bearbeitungsprozesses, bei dem ein durch die Schweißstrahleinrichtung geführter Schweißstrahl auf das Werkstück auftritt, ist an der ortsfesten Schweißstrahleinrichtung ein Stereomikroskop vorgesehen, welches einen Einblick in den abgeschlossenen Arbeitsraum zur Bearbeitungsstelle ermöglicht.

Diese Bearbeitungsmaschine ermöglicht eine präzise Bearbeitung der Werkstücke. Aufgrund der ortsfesten Anordnung des Stereomikroskopes als auch dem abgeschlossenen Arbeitsraum sowie der erforderlichen Verschiebbewegung des Werkstückes zu dessen Bearbeitung ist der Einsatz einer solchen Bearbeitungsmaschine auf darauf abgestimmte Bearbeitungsfälle begrenzt. Zudem weist ein solcher Arbeitsplatz ergonomische Nachteile für den Benutzer auf.

Aus der JP 09-300 088 A geht eine Handbearbeitungsmaschine zum Bearbeiten eines Werkstücks mit einem Laserstrahl hervor. Dabei wird die Handbearbeitungsmaschine von Hand relativ zum ortsfesten Werkstück zu dessen Bearbeitung geführt und bewegt. Diese Handbearbeitungsmaschine umfasst eine an einem Handgehäuse angeordnete CCD-Kamera, welche eine zweidimensionale Abbildung von der Bearbeltungsstelle erfasst und über eine am Kopf des Benutzers positionierte Anzeige dem Benutzer visualisiert.

Eine solche Handbearbeitungsmaschine weist den Nachteil auf, dass die Bearbeitung unpräzise ist, da der Abstand zwischen der Bearbeitungsstelle des Werkstückes und dem Schneidkopf des Handgerätes aufgrund der Handführung nicht konstant gehalten werden kann. Darüber hinaus ist die Visualisierung der Bearbeitungsstelle über die CCD-Kamera durch die zumeist unruhige Handführung beeinträchtigt und somit über Bearbeitungsbereiche unscharf. Darüber hinaus kann durch die CCD-Kamera nur eine zweidimensionale Abbildung der Bearbeitungsstelle erfasst werden. Des Weiteren ist die Flexibilität der Bearbeitung von Werkstücken durch die Leistung solcher Handgeräte sehr beschränkt.

Der Erfindung liegt deshalb die Aufgabe zugrunde, ein Verfahren zur Prozessvisualisierung einer Bearbeitung eines Werkstückes durch eine Lasermaterialbearbeitung sowie eine Bearbeitungsmaschine mit einer Prozessvisualisierung zur Durchführung der Lasermaterialbearbeitung zu schaffen, bei der eine dreidimensionale Prozessvisuallsierung der Bearbeitungsstelle sowie unabhängig davon eine flexible Bearbeitung ermöglicht ist.

Diese Aufgabe wird erfindungsgemäß durch ein Verfahren gemäß den Merkmalen des Anspruchs 1 gelöst. Durch eine Entkopplung der Signalerfassungseinrichtung von einer Ausgabe der erfassten Prozessbilder der Bearbeitungsstelle durch zumindest ein elektronisches Binokular oder einen Computerbildschirm wird ermöglicht, dass insbesondere bei einer Bearbeitung des Werkstücks mit einem Laserstrahlein Materialbearbeitungskopf zur Führung des Bearbeitungsstrahles in allen Freiheitsgraden bewegt werden kann, ohne dass der Bediener seinen Kopf zur Beobachtung der Bearbeitungsstelle nachführen muss. Dadurch können alle erforderlichen Vorschubbewegungen des Materialbearbeitungskopfes, insbesondere bei der 3D-Bearbeitung, durchgeführt werden, so dass ein werkstückunabhängiger Aufbau der Bearbeitungsmaschine ermöglicht ist. Durch die zumindest eine ein- oder mehrachsige Führung des Materialbearbeitungskopfes, der manuell und/oder über eine NC-Steuerung ansteuerbar ist, und durch zumindest zwei Signalerfassungseinrichtungen wird erzielt, dass eine präzises Erfassung eines Prozessbildes an der Bearbeitungsstelle ermöglicht ist. Ein unruhiges und/oder unscharfes Prozessbild, wie dies beispielsweise bei einer handgeführten Schweißstrahleinrichtung der Fall wäre, kann zudem durch die zumindest eine ein- oder mehrachsige Führung eliminiert werden. Darüber hinaus weist das erfindungsgemäße Verfahren durch die Erfassung eines Prozessbildes mit zumindest zwei Signalerfassungseinrichtungen den Vorteil auf, dass ein dreidimensionales Prozessbild erzeugt und auf zumindest einem elektronischen Binokular mit zwei Bildschirmen oder an zumindest einem Computermonitor, insbesondere einem 3D-Monitor, dargestellt wird. Durch die elektronische Übertragung des Prozessbildes können des Weiteren Komponenten wie Blendschutz, Bildumkehrung, Binokulartubus, Laserfilter entfallen, wodurch ein einfacher Aufbau zur Prozessvisualisierung ermöglicht ist. Die Signalerfassungseinrichtungen können unmittelbar von der Bearbeitungsstelle Prozessbilder erfassen und werden bevorzugt zusammen mit dem Materialbearbeitungskopf verfahren.

Nach einer bevorzugt Ausgestaltung des Verfahrens ist vorgesehen, dass das zumindest eine übertragene Prozessbild aus dem Materialbearbeitungskopf ausgekoppelt wird. Diese Anordnung weist den Vorteil auf, dass beispielsweise eine direkte Anbindung einer Materialbearbeitungsstrahlzuführung über einen Lichtleiter an den Materialbearbeitungskopf ermöglicht ist. Dies ermöglicht auch, dass beispielsweise der Materialbearbeitungskopf an einem Roboter als Handhabungsmedium vorgesehen sein kann.

Nach einer alternativen Ausgestaltung des Verfahrens ist vorgesehen, dass das zumindest eine übertragene Prozessbild von dem Materialbearbeitungskopf in eine Materialbearbeitungsstrahleinrichtung weitergeleitet und aus der Materialbearbeitungsstrahleinrichtung ausgekoppelt wird. Diese Auskopplung weist den Vorteil auf, dass bestehende Materialbearbeltungsstrahleinrichtungen eingesetzt werden können, die bezüglich einer Auskoppelstelle modifiziert oder nachgerüstet werden. Die Auskopplung des zumindest einen Prozessbildes aus dem Materialbearbeitungskopf oder aus der Materialbearbeitungsstrahleinrichtung weist darüber hinaus den Vorteil auf, dass keine Beeinträchtigungen zur Erfassung der Signale während einer Materlalbearbeitung gegeben sind.

Nach einer vorteilhaften Ausgestaltung des Verfahrens ist vorgesehen, dass die durch die Signalerfassungseinrichtungen erfassten Signale eines Prozessbildes überlagert und als dreidimensionale Abbildung aufbereitet werden. Bevorzugt ist eine linke und eine rechte Signalerfassungseinrichtung vorgesehen, um die dreidimensionale Abbildung beispielsweise in einem linken und rechten Bildschirm des elektronischen Binokulars auszugeben. Dadurch wird ermöglicht, dass für den Benutzer eine wirklichkeitsgetreue Darstellung der Bearbeitungsstelle übermittelt wird, ohne dass der Benutzer selbst unmittelbar einen Einblick auf die Bearbeitungsstelle hat oder braucht. Dadurch kann der Benutzer eine exakte und präzise Bearbeitung des Werkstückes, insbesondere auch von sehr feinen und filigranen Strukturen ansteuern und durchführen. Der Arbeitsplatz des Benutzers kann zudem für diesen ergonomisch günstig eingerichtet werden.

Nach einer weiteren vorteilhaften Ausgestaltung der Erfindung ist vorgesehen, dass durch die Signalbearbeitungseinrichtung zumindest ein Fadenkreuz, ein oder mehrere Bearbeitungsparameter oder Zustandsmeldungen zur Bearbeitung des Werkstückes in das zumindest eine erfasste und aufbereitete Prozessbild eingeblendet oder diesem überlagert werden. Folglich werden dem Bediener zusätzliche Informationen zur Verfügung gestellt, damit dieser gleichzeitig während einer Überwachung der Bearbeitungsstelle die erforderlichen Parameter erfassen und berücksichtigen kann, ohne den Blick von der Bearbeitungsstelle bzw. dem elektronischen Binokular oder Computermonitor zu entfernen. Das Fadenkreuz dient beispielsweise zur Einstellung und Positionierung des Laserstrahls zum Auftreffpunkt des Laserbearbeitungsstrahles. Durch die Bearbeitungsparameter kann die Bearbeitungsgeschwindigkeit, die Spurbreite und dergleichen überwacht werden, so dass der Bediener zumindest über die wesentlichen Informationen in Echtzeit informiert wird.

Nach einer weiteren vorteilhaften Ausgestaltung des Verfahrens kann das durch die Signalerfassungseinrichtungen erfasste und durch die Signalbearbeltungseinrichtung aufbereitete Prozessbild zur Bildverarbeitung genutzt werden, um durch die dreidimensionale Erfassung des Werkstücks die Bearbeitungsbahn automatisch oder manuell zu teachen, die geteachte Bahn gemäß der aktuellen Lage des Werkstücks zu verschieben und/oder zu verdrehen oder aber auch über eine dynamische Bildverarbeitung Prozessüberwachungsfunktionen wie Nahtverfolgung zu integrieren.

Nach einer weiteren vorteilhaften Ausgestaltung des Verfahrens ist vorgesehen, dass die Signalerfassungseinrlchtung aus einer Kamera besteht, welche eine Auflösung der Strukturen von bis zu 1 µm ermöglicht. Eine Auflösung, beispielsweise von ca. 800 x 600 Pixel oder mehr, ermöglicht hochpräzise Bilder von der Bearbeitungsstelle auf dem zumindest einen elektronischen Binokular oder dem Computermonitor dargestellt werden können.

Nach einer weiteren vorteilhaften Ausgestaltung des Verfahrens ist vorgesehen, dass den Signalerfassungseinrichtungen zumindest eine Vergrößerungseinrichtung vorgeschaltet wird. Dadurch können detaillierte Betrachtungen vorgenommen werden, ohne ein digitales Zoom einzusetzen, so dass eine hohe Bildqualität erzielt wird.

Des Weiteren ist bevorzugt vorgesehen, dass die Aufbereitung der Signale, welche den Signalbearbeitungsprozess bilden, durch einen Video-Multiplexer durchgeführt wird. Dadurch lassen sich durch die Synchronisation der Signale Abbildungen für den Benutzer in Echtzeit erzeugen. Bevorzugt ist der Video-Multiplexer Bestandteil der Steuerung, so dass sämtliche Prozesse über eine gemeinsame Steuerung ablaufen können.

Die der Erfindung zugrundeliegende Aufgabe wird des Weiteren durch eine Bearbeitungsmaschine gelöst, bei welcher die zumindest eine Bearbeitungsposition eines Materialbearbeitungsstrahles, insbesondere eines Laserstrahles, durch Verfahren eines Materialbearbeitungskopfes zum Werkstück positionierbar ist, wobei der Materialbearbeitungskopf manuell und/oder durch eine NC-Steuerung verfahrbar ist. Von der Bearbeitungsposition wird durch zumindest zwei Signalerfassungseinrichtungen jeweils zumindest ein Prozessbild erfasst und für die Aufbereitung der Signale an eine Signalbearbeitungseinrichtung weitergeleitet, um das aufbereitete Prozessbild in zumindest einem elektronischen Binokular mit zwei Bildschirmen oder zumindest einem Computermonitor darzustellen. Dadurch wird eine Materialbearbeitung ermöglicht, bei der die Beobachtungsposition unabhängig von der Position des Materialbearbeitungskopfes zum Werkstück ist. Folglich können auch schwerere Werkstücke handwerklich bearbeitet werden, indem lediglich ein Verfahren des Materialbearbeitungskopfes erforderlich ist. Dieser Materialbearbeitungskopf kann in allen Freiheitsgraden bewegt werden. Die Signalerfassungseinrichtungen können unmittelbar an dem Bearbeitungskopf vorgesehen sein, so dass diese ein Prozessbild direkt von der Bearbeitungsstelle erfassen. Durch einen solchen Aufbau kann des Weiteren die Umhausung der Bearbeitungsmaschine stark vereinfacht werden. Durch die elektronische Übertragung des Prozessbildes können der Blendschutz und die Bildumkehrung wegfallen, wodurch der Aufbau des Arbeitsraumes als auch die Prozessvisualisierung vereinfacht werden. Gleichzeitig kann eine höhere Ergonomie durch die Entkopplung des Einblicks zur Bearbeitungsstelle ermöglicht sein.

Nach einer bevorzugt Ausführungsform der Bearbeitungsmaschine ist vorgesehen, dass am Materialbearbeitungskopf eine Auskoppeleinrichtung vorgesehen ist, durch die das zumindest eine Prozessbild zur Weiterleitung an die Signalerfassungseinrichtungen aus dem Materialbearbeitungskopf auskoppelbar ist. Durch eine solche an dem Materialbearbeitungskopf angeordnete Auskoppeleinrichtung kann eine geschützte Auskopplung erzielt werden. Bevorzugt ist die Auskoppeleinrichtung zur platzsparenden Anordnung im Materialbearbeitungskopf zumindest teilweise eingebunden.

Nach einer weiteren alternativen Ausgestaltung der Bearbeitungsmaschine ist vorgesehen, dass der Materialbearbeitungskopf an einer Materialbearbeitungsstrahleinrichtung vorgesehen und dass das zumindest eine an die Materialbearbeitungseinrichtung weitergeleitete Prozessbild aus der Materialbearbeitungseinrichtung auskoppelbar ist. Dies ermöglicht, dass die Signalerfassungseinrichtungen entfernt vom Materialbearbeitungskopf im geschützten Bereich vorgesehen sind.

Bevorzugt ist an der Materialbearbeltungseinrichtung eine Auskoppeleinrichtung vorgesehen, die das Prozessbild aus der Materialbearbeitungseinrichtung auskoppelt und den Signalerfassungseinrichtungen zuführt. Solche Auskoppeleinrichtungen können auch nachrüstbar vorgesehen sein, um eine bestehende Bearbeitungsmaschine umzurüsten.

Die Auskoppeleinrichtung umfasst gemäß einer bevorzugten Ausgestaltung zumindest einen Strahlteiler, um das in dem Materialbearbeitungskopf oder der Materialbearbeitungseinrichtung geführte Prozessbild auszukoppeln.

Nach einer vorteilhaften Ausgestaltung der Bearbeitungsmaschine ist vorgesehen, dass das zumindest eine elektronische Binokular oder der zumindest eine Computermonitor unabhängig von der Materialbearbeitungsstrahleinrichtung positionierbar sind. Dadurch ist eine Erhöhung in der Flexibilität bei der Überwachung dieser Bearbeitungsmaschine gegeben. Der Benutzer kann frei über die Anordnung des elektronischen Binokulars oder des Bildschirmes aufgrund der elektronischen Datenübertragung des aufbereiteten Prozessbildes entscheiden.

Durch die unabhängige Positionierung des elektronischen Binokulars und/oder der Computermonitore kann auch ermöglicht sein, dass getrennt und entfernt von der Bearbeitungsmaschine Computermonitore zur zusätzlichen oder separaten Überwachung der Laserbearbeitung vorgesehen sein können.

Nach einer bevorzugten Ausführungsform der Bearbeitungsmaschine ist vorgesehen, dass die Signalerfassungseinrichtung als Kamera, insbesondere als CCD- oder CMOS-Kamera ausgebildet ist, welche vorzugsweise mit zumindest einer S-VGA-Auflösung arbeitet. Dadurch können feine Strukturen von weniger als 5 µm deutlich aufgelöst werden.

Das elektronische Binokular ist gemäß einer ersten Ausführungsform an dem Schutzgehäuse der Bearbeitungsmaschine befestigbar. Dies ermöglicht, dass für den Benutzer kurze Wege gegeben sind, so dass dieser unmittelbar nach dem Bestücken der Bearbeitungsmaschine mit einem neuen Werkstück den nachfolgend gestarteten Bearbeitungsprozess beobachten kann.

Nach einer alternativen Ausgestaltung der Erfindung ist vorgesehen, dass das elektronische Binokular als eine am Kopf des Betrachters anbringbare Tragevorrichtung mit zwei Bildschirmen ausgebildet ist. Solche sogenannten Head Mounted Displays (HMD) ermöglichen, dass der Benutzer unabhängig von der Bearbeitungsmaschine sich bewegen und dennoch den Bearbeitungsprozess überwachen kann.

Das elektronische Binokular ist bevorzugt an der Tragevorrichtung derart befestigt, dass dieses im Abstand zur individuellen Sehhilfe des Benutzers einstellbar ist. Dadurch ist ein universeller Einsatz der Tragevorrichtung ermöglicht, ohne dass der Benutzer seine individuelle Sehhilfe absetzen muss. Alternativ kann vorgesehen sein, dass das elektronische Binokular eine Einstellmöglichkeit auf die individuelle Sehstärke des Benutzers ermöglicht.

Bei der Ausgestaltung des elektronischen Binokulars als Head Mounted Display ist bevorzugt vorgesehen, dass vor dem elektronischen Binokular und der Sehhilfe oder zwischen dem elektronischen Binokular und der Sehhilfe eine Laserschutzvorrichtung vorgesehen ist. Beispielsweise kann eine solche Laserschutzvorrichtung als Korbversion auf dem Head Mounted Display montiert werden. Dadurch ist zum einen die Lasersicherheit gegeben und zum anderen die Vereinfachung beim Aufbau des Schutzgehäuses der Bearbeitungsmaschine.

Nach einer weiteren vorteilhaften Ausgestaltung der Bearbeitungsmaschine ist vorgesehen, dass das elektronische Binokular oder der Computermonitor aus dem Sichtfeld des Betrachters herausschwenkbar oder herausklappbar sind. Analoges gilt auch für einen SD-Monitor. Beispielsweise kann bei der Anordnung des elektronischen Binokulars oder Computermonitors an dem Gehäuse durch die klappbare Anordnung ermöglicht sein, dass der Benutzer seine Position zur Bearbeitungsmaschine beibehält und einerseits die Betrachtung über das elektronische Binokular oder den Monitor vornehmen kann und andererseits nach der Schwenkbewegung einen unmittelbaren Einblick auf die Bearbeitungsstelle hat. Bei der Anordnung des elektronischen Binokulars in einer Tragevorrichtung als Head Mounted Display kann der Benutzer durch einfaches Klappen weitere Tätigkeiten durchführen, ohne die gesamte Tragevorrichtung abzusetzen. Besonders bevorzugt ist ein elektronisches Binokular das gleichzeitig oder abwechselnd eine Prozessvisualisierung und/oder Betrachtung der Umgebung ermöglicht.

Die Erfindung sowie weitere vorteilhafte Ausführungsformen und Weiterbildungen derselben werden im Folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine perspektivische Darstellung einer erfindungsgemäßen Bearbeitungsmaschine und
- Figur 2: eine schematische Schnittdarstellung einer Lasermaterialbearbeitungsstrahleinrichtung mit daran angeordneten Signalerfassungselnrichtungen.

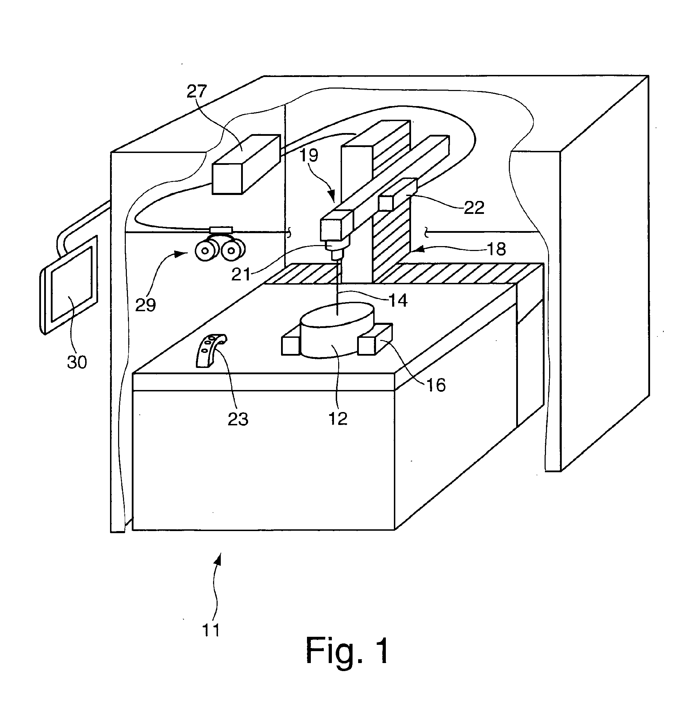

In Figur 1 ist eine perspektivische Darstellung einer Bearbeitungsmaschine 11 zur Bearbeitung eines Werkstücks 12 mit einem Lasermaterialbearbeitungsstrahl 14 dargestellt. Bei dieser Bearbeitungsmaschine 11 handelt es sich insbesondere um eine Laserbearbeitungsmaschine, bei der das Werkstück 12 mit einem Lasermaterialbearbeitungsstrahl 14 bearbeitet wird, um insbesondere Schweißarbeiten oder Aufschweißungen durchzuführen. Diese Bearbeitungsmaschine 11 umfasst eine Werkstückaufnahme 16, welche bevorzugt als stillstehende Montageplatte zum Festspannen des Werkstückes 12 ausgebildet ist. Alternativ kann die Werkstückaufnahme 16 auch zumindest eine ein- oder mehrachsige Führung aufweisen, um das Werkstück 12 in seiner Lage und Position verändern. An einer zumindest einachsigen Führung 18 ist eine Lasermaterialbearbeitungseinrichtung bzw. Lasermaterialbearbeitungsstrahleinrichtung 19 vorgesehen, die einen Lasermateialbearbeltungskopf 21 der Lasermaterialbearbeitungsstrahleinrichtung 19 zum Werkstück 12 positioniert. Die Lasermaterialbearbeitungsstrahleinrichtung 19 ist gemäß dem Ausführungsbeispiel als Strahlführung zum Führen und/oder Formen des Lasermaterialbearbeitungsstrahles 14 mit Lasermaterialbearbeitungskopf 21 ausgebildet, welche an der Führung 18 befestigt ist und durch diese Führung 18 in eine Bearbeitungsposition zum Werkstück 12 verfahrbar ist. Die Lasermaterialbearbeitungsstrahleinrichtung 19 kann auch nur als Lasermaterialbearbeitungskopf 21 ausgebildet sein oder kann auch weitere Komponenten zum Bilden, Formen und/oder Führen des Lasermaterialbearbeitungsstrahls 14 umfassen. Dadurch ist der Lasermaterialbearbeitungsstrahl 14 in einer Bearbeitungsposition zum Werkstück 12 positionierbar, Die Einstellung der Bearbeitungsposition des Lasermaterialbearbeitungsstrahls 14 erfolgt bevorzugt durch eine Handsteuerung, welche beispielsweise über eine Handsteuereinrichtung 23 oder einen Joystick erfolgen kann, oder eine automatische Steuerung (NC-Steuerung).

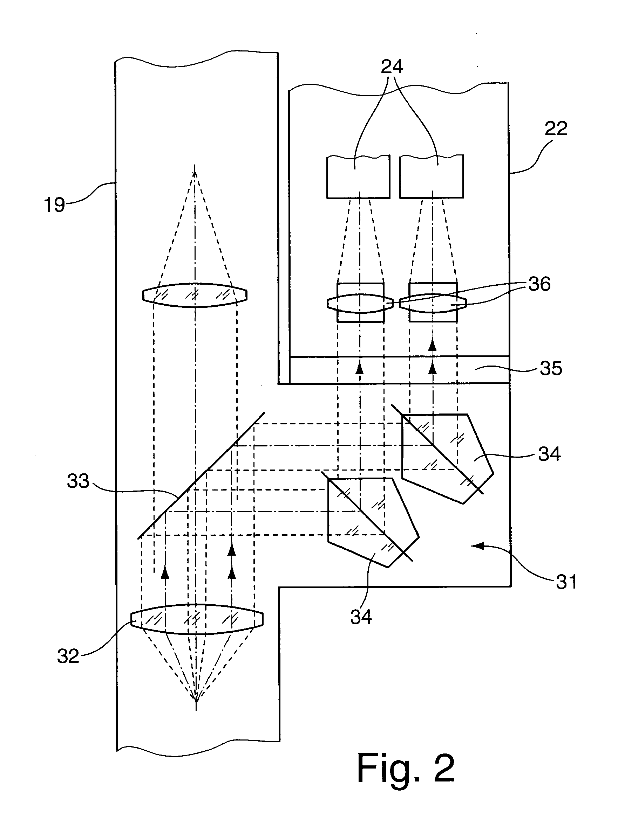

In Figur 2 ist eine schematische Schnittdarstellung einer Lasermaterialbearbeitungsstrahleinrichtung 19 mit einem daran angeordneten Nebenarm 22 vergrößert dargestellt. Diesen Nebenarm 22 nimmt zumindest zwei Signalerfassungseinrichtungen 24 auf, welche von einer Bearbeitungsstelle auf dem Werkstück 12 ein Prozessbild erfassen. Dabei wird das Prozessbild aus der Lasermaterialbearbeitungsstrahlführung, von der nur eine Linse 32, die das Prozessbild kollimiert, beispielhaft dargestellt ist, aus der Lasermaterialbearbeitungsstrahleinrichtung 19 über eine Auskoppeleinrichtung 31 ausgekoppelt. Die Auskoppeleinrichtung 31 umfasst zumindest einen Strahlteiler 33. Des Weiteren kann die Auskoppeleinrichtung 31 zumindest ein Strahlführungselement 34, wie beispielsweise ein Prisma oder Umlenkspiegel sowie Strahlformungselemente, wie beispielsweise Linsen, umfassen, die das Prozessbild zu den Signalerfassungseinrichtungen 24 führen. Bevorzugt sind zwei Pentaprismen vorgesehen, um das Prozessbild zweizuteilen, so dass jeweils ein Teil des Prozessbildes jeweils einer Signalerfassungseinrichtung 24 zugeführt wird. Zwischen den Prismen 34 und den Fokussieroptiken 36 ist bevorzugt eine Vergrößerungseinrichtung 35 austauschbar vorgesehen. Diese Vergrößerungseinrichtung 35 ermöglicht eine optische Vergrößerung des Prozessbildes. Alternativ kann die Vergrößerungseinrichtung 35 auch in der Prozessbildführung der Lasermaterialbearbeitungsstrahleinrichtung 19 vorgesehen sein. Des Weiteren kann bevorzugt vor jeder Strahlerfassungseinrichtung 24 eine Kollimations-/Fokussieroptlk 36 vorgesehen sein, um das vergrößerte Prozessbild auf die jeweiligen Signalerfassungseinrichtungen 24 zu fokussieren.

In Figur 2 ist beispielhaft die Auskopplung des Prozessbildes aus der Lasermaterialbearbeitungsstrahleinrichtung 19 in den Nebenarm 22 dargestellt. Alternativ kann eine solche Auskopplung auch aus dem Lasermaterialbearbeitungskopf 21 erfolgen.

Die Signalerfassungseinrichtungen 24 sind bevorzugt als CCD- oder CMOS-Kameras ausgebildet, welche eine S-VGA-Auflösung aufweisen. Das durch die beiden Signalerfassungseinrichtungen 24 erfasste Prozessbild wird an eine Signalbearbeitungseinrichtung 27 weitergeleitet, wie in Figur 1 dargestellt ist.

Diese Signalbearbeltungseinrichtung 27 umfasst u. a. einen Video-Multiplexer, der die Signale an die Kamera weitergibt und zudem die Helligkeit und den Kontrast der erfassten Bilder steuert. Gleichzeitig wird auf dem Video-Multiplexer eine Synchronisation der Signale erfasst, so dass eine 3D-Prozessvisualisierung und die Ausgabe eines 3D-Bildes von der Bearbeitungsstelle auf zumindest einem elektronischen Binokular 29 und/oder Computermonitor 30 ermöglicht ist.

Durch die Signalbearbeitungseinrichtung 27 können einzelne Prozessparameter und Informationen in das durch die Signalerfassungseinrichtung 24 erfasste dreidimensionale Bild eingeblendet und im Binokular im dreidimensionalen Bild dargestellt werden. Beispielsweise kann ein Fadenkreuz zur Zielmarkierung eingeblendet werden, um die Zielführung des Schneidstrahls zu ermöglichen. Des Weiteren können unterschiedliche Kontrastfarben eingeblendet werden, um eine hinreichende visualisierung der Strukturen an der Bearbeitungsstelle bei unterschiedlichen Werkstoffen zu gewährleisten.

Die Übertragung der Signale von den Signalerfassungseinrichtungen 24 zum elektronischen Binokular 29 oder Computermonitor 30 kann über eine Signalleitung als auch kabellos erfolgen.

Das elektronische Binokular 29 besteht aus zwei Bildschirmen, wobei In jedem Bildschirm ein separates Bild eingeblendet wird, so dass bei dessen Betrachtung über den Benutzer eine dreidimensionale Abbildung der Bearbeitungsstelle erzielt wird. Bei diesem Bildschirm kann es sich beispielsweise um einen OLED- oder LCD-Bildschirm, insbesondere mit Hintergrundbeleuchtung, handeln.

Solche elektronischen Binokulare 29 sind bevorzugt an einer Tragevorrichtung vorgesehen, die am Kopf des Benutzers befestigbar ist. Eine solche Ausgestaltung wird als Head Mounted Display bezeichnet. Dabei können folgende Ausgestaltungen bei den vorliegenden Einsatzzwecken vorgesehen sein. Beispielsweise kann die Tragevorrichtung mit einem elektronischen Binokular 29 und einem Laserschutz ausgestattet sein, wobei der Benutzer seine individuelle Sehhilfe unbeeinträchtigt tragen kann. Alternativ kann vorgesehen sein, dass das elektronische Binokular 29 mit einer Einstellmöglichkeit zur Sehstärkenkorrektur ausgebildet ist.

Bevorzugt ist das elektronische Binokular 29 an der Tragevorrichtung schwenkbar oder wegklappbar vorgesehen. Diese Schwenk- oder Klappfunktion kann auch bei der Befestigung des elektronischen Binokulars 29 am Schutzgehäuse der Bearbeitungsmaschine 11 vorgesehen sein.

Alternativ zur Darstellung der Bearbeitungsstelle über das elektronische Binokular 29 oder zusätzlich zum Binokular 29 kann ein Computermonitor 30 vorgesehen sein, der an oder in der Nähe der Bearbeitungsmaschine 11 als auch entfernt zu Bearbeitungsmaschine 11 angeordnet sein kann. Darüber hinaus ist ermöglicht, dass mehrere Tragevorrichtungen mit elektronischen Binokularen 29 und/oder Computermonitore 30 an die Signalbearbeitungseinrichtung 27 anschließbar sind, so dass beispielsweise mehrere Betrachter gleichzeitig die Möglichkeit haben, den Bearbeitungsprozess und die Qualität zu überwachen. Alternativ oder zusätzlich kann auch ein 3D-Monltor vorgesehen sein. Dieser 3D-Monitor umfasst zwei Signaleingänge, die die Ausgabe eines 3D-Bildes ermöglichen.

## Patentansprüche

1. Verfahren zur Prozessvisualisierung einer Bearbeitung eines Werkstückes (12) mit einem Materialbearbeitungsstrahl (14), insbesondere einem Laserstrahl, bei dem zur Bearbeitung des Werkstücks (12) der Materialbearbeitungsstrahl (14) durch einen Materialbearbeitungskopf (21) in zumindest einer Bearbeitungsposition zum Werkstück (12) positioniert wird und bei dem von einer Bearbeitungsstelle, in welcher der Materialbearbeitungsstrahl (14) auf das Werkstück (12) auftrifft, zumindest ein Prozessbild erfasst wird,
**dadurch gekennzeichnet,**
- **dass** der Materialbearbeitungskopf (21) mit einer ansteuerbaren und über zumindest eine ein- oder mehrachsige Führung (18) zur Positionierung des Schneidstrahles (14) zur Bearbeitungsstelle verfahren wird,
- **dass** das zumindest eine Prozessbild durch zumindest zwei Signalerfassungseinrichtungen (24) erfasst wird,
- **dass** Signale des zumindest einen von den Signalerfassungseinrichtungen (24) erfassten Prozessbildes zur Signalbearbeitungseinrichtung (27) weitergeleitet und aufbereitet werden und
- **dass** die aufbereiteten Signale des zumindest einen Prozessbildes an zumindest ein elektronisches Binokular (29) mit zwei Bildschirmen oder an zumindest einen Computermonitor (30) weitergeleitet werden.

2. Verfahren nach Anspruch 1, **dadurch gekennzeichnet, dass** das zumindest eine übertragene Prozessbild aus dem Materialbearbeitungskopf (21) ausgekoppelt wird.

3. Verfahren nach Anspruch 1, **dadurch gekennzeichnet, dass** das zumindest eine übertragene Prozessbild aus dem Materialbearbeitungskopf (21) in eine Materialbearbeitungseinrichtung (19) weitergeleitet und aus der Materialbearbeitungsstrahleinrichtung (19) ausgekoppelt wird.

4. Verfahren nach Anspruch 1, **dadurch gekennzeichnet, dass** die Signale der jeweiligen Signalerfassungseinrichtung (24) durch die Signalbearbeitungseinrichtung (27) als ein dreidimensionales Bild aufbereitet und ausgegeben werden.

5. Verfahren nach Anspruch 1, **dadurch gekennzeichnet, dass** durch die Signalbearbeitungseinrichtung (27) zumindest ein Fadenkreuz, zumindest ein Bearbeitungsparameter oder Zustandsmeldungen zur Bearbeitung des Werkstücks (12) dem zumindest einen erfassten und aufbereiteten Prozessbild überlagert oder in das zumindest eine Prozessbild eingeblendet werden.

6. Verfahren nach Anspruch 1, **dadurch gekennzeichnet, dass** das durch die Signalerfassungseinrichtungen (24) erfasste und durch die Signalbearbeitungseinrichtung (27) aufbereitete Prozessbild zur Bildverarbeitung genutzt wird

7. Verfahren nach einem der vorhergehenden Ansprüche, **dadurch gekennzeichnet, dass** als Signalerfassungseinrichtungen (24) Kameras eingesetzt werden, welche Strukturen bis zu 1 µm erfassen.

8. Verfahren nach einem der vorhergehenden Ansprüche, **dadurch gekennzeichnet, dass** im Strahlengang zur Übertragung des Prozessbildes den Signalerfassungseinrichtungen (24) zumindest eine optische Vergrößerungseinrichtung (26) vorgeschalten wird.

9. Verfahren nach einem der vorhergehenden Ansprüche, **dadurch gekennzeichnet, dass** die von der Signalerfassungseinrichtung (24) erfassten Signale durch einen Video-Multiplexer der Signalbearbeitungseinrichtung (27) aufbereitet und synchronisiert sowie in Echtzeit ausgegeben werden.

10. Bearbeitungsmaschine mit einer Prozessvisualisierung zur Bearbeitung eines Werkstückes (12) mit einem Materialbearbeitungsstrahl (14), insbesondere zur Durchführung des Verfahrens nach einem der Ansprüche 1 bis9, bei welcher der Materialbearbeitungsstrahl (14) durch einen Materialbearbeitungskopf (21) zum Bearbeiten des Werkstücks (12) in einer Bearbeitungsposition, in welcher der Materialbearbeitungsstrahl (14) auf das Werkstück (12) auftrifft, positionierbar ist, **dadurch gekennzeichnet,**
- **dass** die zumindest eine Bearbeitungsposition des Materialbearbeitungsstrahls (14) durch eine Ansteuerung des Materialbearbeitungskopfes (21) einstellbar ist, der über zumindest eine ein- oder mehrachsige Führung gegenüber dem Werkstück (12) verfahrbar ist,
- **dass** zumindest zwei Signalerfassungseinrichtungen (24) vorgesehen sind, durch welche jeweils zumindest ein Prozessbild von der Bearbeitungsstelle erfassbar ist,
- **dass** zumindest eine Signalbearbeitungseinrichtung (27) für die Aufbereitung der Signale des zumindest einen Prozessbildes vorgesehen ist, und
- **dass** zumindest ein elektronisches Binokular (29) mit zwei Bildschirmen vorgesehen ist, auf denen das zumindest eine aufbereitete Prozessbild darstellbar ist oder dass zumindest ein Computermonitor (30) vorgesehen ist, auf dem das zumindest eine aufbereitete Prozessbild darstellbar ist.

11. Bearbeitungsmaschine nach Anspruch 10, **dadurch gekennzeichnet, dass** an dem Materialbearbeitungskopf (21) eine Auskoppeleinrichtung (31) vorgesehen ist, durch die das zumindest eine Prozessbild zur Weiterleitung an die Signalerfassungseinrichtungen (24) aus dem Materialbearbeitungskopf (21) auskoppelbar ist.

12. Bearbeitungsmaschine nach Anspruch 10, **dadurch gekennzeichnet, dass** der Bearbeitungskopf (21) an einer Materialbearbeitungsstrahleinrichtung (19) vorgesehen und dass ein in die Materialbearbeitungsstrahleinrichtung (19) weitergeleltetes Prozessbild aus der Materialbearbeitungsstrahleinrichtung (14) auskoppelbar ist.

13. Bearbeitungsmaschine nach Anspruch 12, **dadurch gekennzeichnet, dass** an der Materialbearbeitungsstrahleinrichtung (19) eine Auskoppeleinrichtung (31) vorgesehen ist, die das Prozessbild aus der Materialbearbeitungsstrahleinrichtung (19) auskoppelt und zu den Signalerfassungseinrichtungen (24) führt.

14. Materialbearbeitung nach Anspruch 13, **dadurch gekennzeichnet, dass** die Auskoppeleinrichtung (31) zumindest einen Strahlteiler (33) umfasst.

15. Bearbeitungsmaschine nach Anspruch 10, **dadurch gekennzeichnet, dass** das zumindest eine elektronische Binokular (29) oder der zumindest eine Computermonitor (30) unabhängig von der Materialbearbeitungsstrahleinrichtung (19) positionierbar sind.

16. Bearbeitungsmaschine nach Anspruch 10, **dadurch gekennzeichnet, dass** die Signalerfassungseinrichtung (24) als Kamera, vorzugsweise mit zumindest einer S-VGA-Auflösung, ausgebildet ist.

17. Bearbeitungsmaschine nach Anspruch 10, **dadurch gekennzeichnet, dass** das elektronische Binokular (29) an einem Schutzgehäuse oder einer Umhausung der Bearbeitungsmaschine (11) befestigbar ist.

18. Bearbeitungsmaschine nach Anspruch 10, **dadurch gekennzeichnet, dass** das elektronische Binokular (29) als eine am Kopf des Betrachters anbringbare Tragevorrichtung mit zwei Bildschirmen ausgebildet ist.

19. Bearbeitungsmaschine nach Anspruch 18, **dadurch gekennzeichnet, dass** das elektronische Binokular (29), welches an der Tragevorrichtung befestigt ist, im Abstand zur individuellen Sehhilfe eines Benutzers einstellbar ist.

20. Bearbeitungsmaschine nach Anspruch 18, **dadurch gekennzeichnet, dass** das elektronische Binokular (29) auf die individuelle Sehstärke des Benutzers einstellbar ist.

21. Bearbeitungsmaschine nach Anspruch 19, **dadurch gekennzeichnet, dass** vor dem elektronischen Binokular (29) und der Sehhilfe oder zwischen dem elektronischen Binokular (29) und der Sehhilfe eine Laserschutzvorrichtung vorgesehen ist.

22. Bearbeitungsmaschine nach Anspruch 17 oder 18, **dadurch gekennzeichnet, dass** das elektronische Binokular (29) aus dem Sichtfeld des Betrachters herausschwenkbar oder herausklappbar vorgesehen ist.
